# EUROPEAN PATENT APPLICATION

(11) **EP 0 983 980 A1**
(43) Date of publication of application: **08.03.2000**
(21) Application number: 99902827.7
(22) Date of filing: 03.02.1999
(51) Int. Cl.: C04B 38/06

(54) **POROUS CERAMIC SINTER AND PROCESS FOR PRODUCING THE SAME**

(30) Priority: 25.02.1998 JP 6068998
(71) Applicant: Tamiya, Inc., Shizuoka-shi, Shizuoka-ken 422-8022 (JP); Shimada, Kouichi, Shimada-shi, Shizuoka-ken 427-0034 (JP)
(72) Inventor: SHIMADA, Kouichi, Shimada-shi Shizuoka-ken 427-0034 (JP)
(74) Representative: Smith, Norman Ian
(86) International application number: JP9900468
(87) International publication number: WO9943631

(57) **Abstract**

The present invention provides a porous ceramic sintered body with a specific gravity of 0.3 g/cm³ or less that is formed by filling the ceramic starting material with granules to be transformed into voids during sintering, wherein at least two kinds of the granules with different mean grain sizes with each other, especially larger size granules with a mean grain size in the range from 2.0 to 3.5 mm, medium size granules with a mean grain size in the range from 0.8 to 2.5 mm and smaller size granules with a mean grain size in the range from 0.06 to 0.15 mm, are preferably used together, thereby enabling the porous body to be lightweight while maintaining its mechanical strength.

## Description

### Technical Field

The present invention relates to ultra-light weight porous ceramics provided with a high heat-resistance that is used for heat insulating tiles and the like, and a method for manufacturing the same.

### Background Art

It has been recently required in some application fields to produce a lightweight ceramic sintered body. Manufacturing methods comprising the steps of filling granules of foamed polystyrene into the starting material of ceramics, processing the filled material into a green body and sintering the green body to produce a porous ceramic sintered body having voids generated by incinerating the granule portions have been attempted to allow the sintered body to be lightweight. When the inorganic substances such as kaolinite and sericite comprising the principal component of the ceramic starting material have a specific gravity of about 2 g/cm³, the bulk volume of the ceramic starting material have to be increased ten times relative to the original volume by adding granules, in order to make the sintered body to be lightweight to an extent of 1/10 with an apparent specific gravity of, for example, 0.2 g/cm³.

When the granules to be used for increasing the bulk volume of the ceramics have a particle size as small as several micrometers (µm), the overall particle number to be added becomes so large that the sintered porous body contains countless number of fine pores in its ceramic frame to unable to maintain its shape because the ceramic body becomes very brittle. When granules having a particle size of several millimeters (mm) are added, on the other hand, a green body in which granules come in contact with each other are formed, thereby the ceramic frame of the porous body can be hardly formed due to collapse of the ceramic frame. Consequently, a specific gravity of 0.35 g/cm³ has been achieved at most by adding granules in the conventional ceramic body in order to obtain the lightweight ceramics. Lightweight ceramics having smaller specific gravities as described above can not be actually obtained, which is the problem to be solved by the present invention.

### Disclosure of Invention

The present invention, carried out for solving the problems as hitherto described, provides a porous ceramic sintered body formed by filling a ceramic starting material with granules to be converted into voids by incinerating during the baking step, wherein the specific gravity is adjusted to 0.3 g/cm³ or less by filling the ceramic starting material with the granules consisting of at least two kinds of granules having different average grain sizes with each other.

The granules described above are composed of larger size (diameter) granules for forming a porous frame and smaller size (diameter) granules for allowing the frame itself to be more porous.

Medium size (diameter) granules having a mean grain size between those of the larger size grains and smaller size grains may be further filled into the ceramic starting material.

In addition to the larger size granules and the smaller size granules the mean grain size of the medium size granules is selected from the grain size by which voids are formed by filling the medium size granules in the thick frame portions formed among the larger size granules.

The mean grain size of the larger size granules is in the range from 1.5 to 5 mm, preferably in the range from 2.0 to 4.5 mm and more preferably in the range from 2.0 to 3.5 mm, and the mean grain size of the smaller size granules is in the range from 0.01 to 0.5 mm, preferably in the range from 0.04 to 0.2 mm and more preferably in the range from 0.06 to 0.15 mm.

The mean grain size of the medium size granules is in the range from 0.5 to 3.0 mm, and preferably in the range from 0.8 to 2.5 mm.

The present invention also provides a method for manufacturing a porous ceramic sintered body by filling a ceramic starting material with granules to be converted into voids by incinerating in the baking step, wherein a green body is formed by filling the ceramic starting material with larger size granules selected from those having a mean grain size of 1.5 to 5 mm, medium size granules selected from those having a mean grain size of 0.5 to 3.0 mm and smaller size granules selected from those having a mean grain size of 0.04 to 0.2 mm, followed by sintering to form a porous ceramic sintered body with a specific gravity of 0.3 g/cm³ or less.

Accordingly, the present invention provides unprecedented ultra-lightweight porous ceramics having a specific gravity of 0.3 g/cm³ or less or about 0.1 g/cm³ at best.

### Brief Description of Drawings

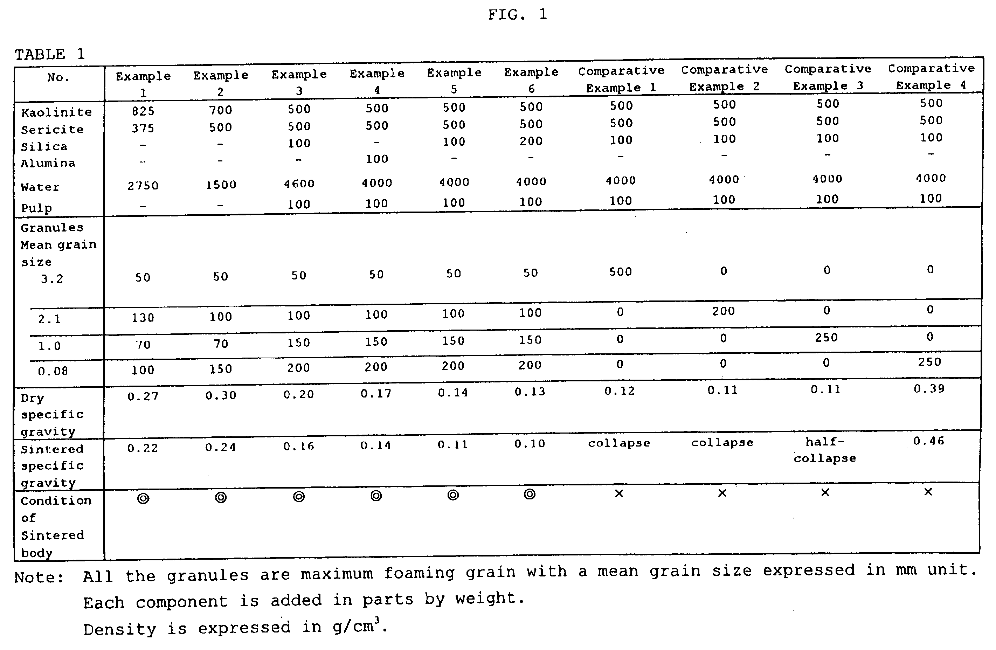

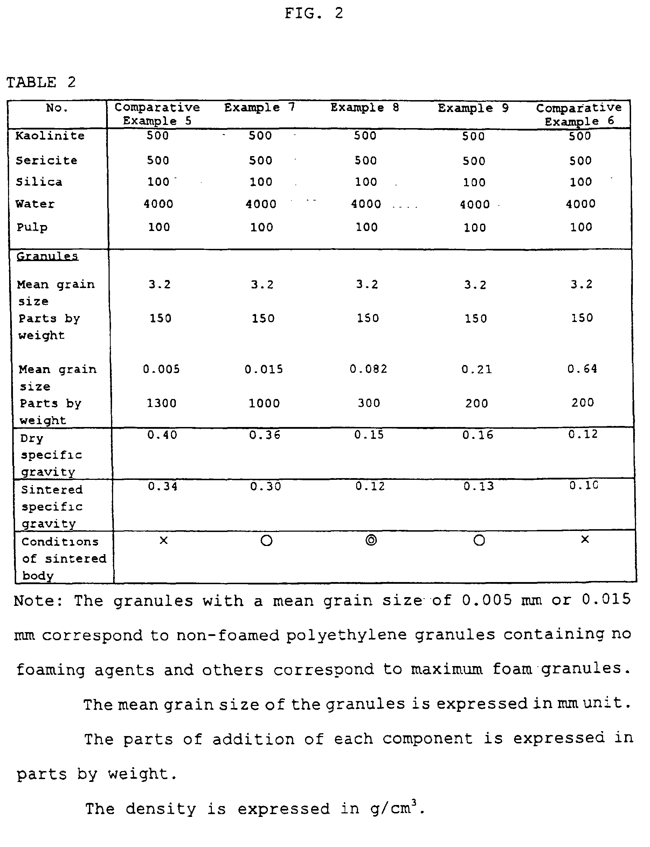

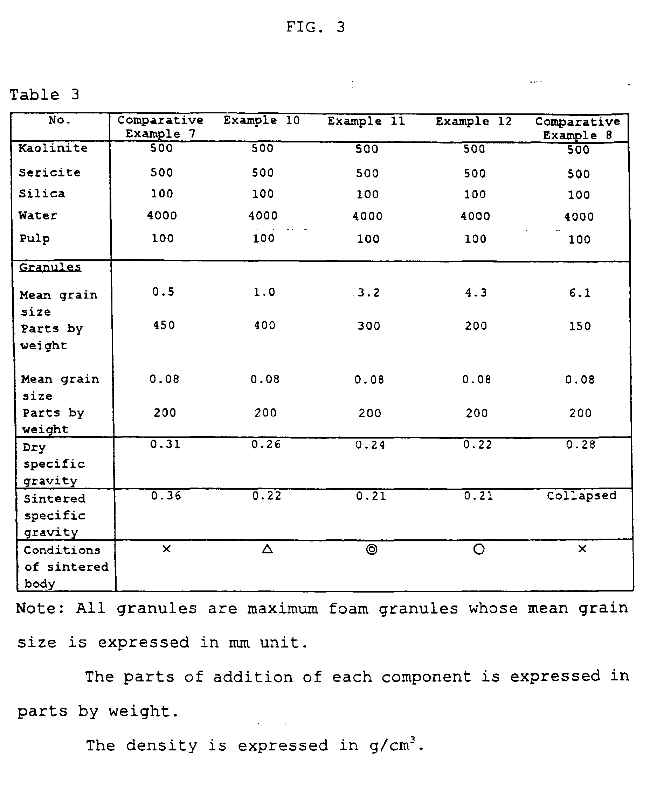

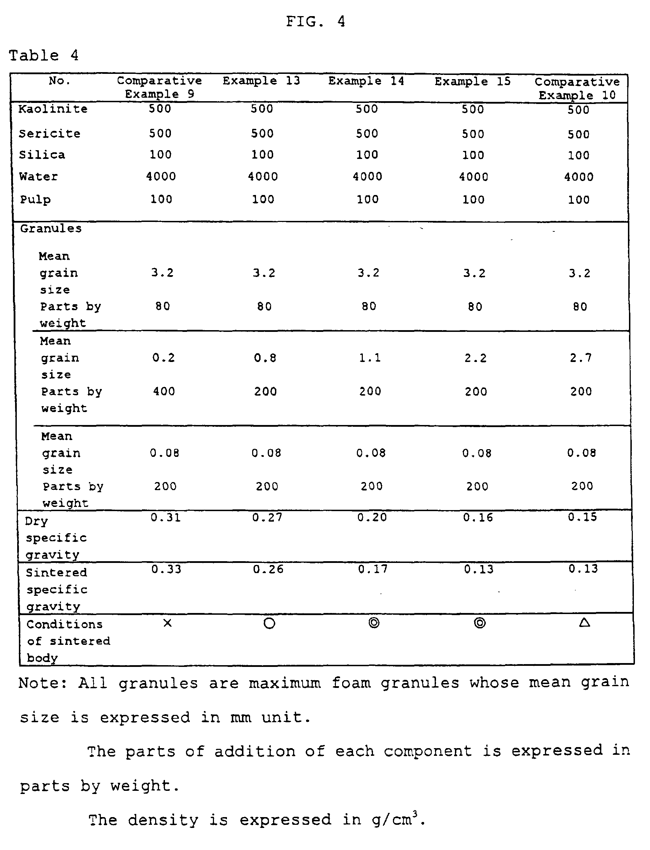

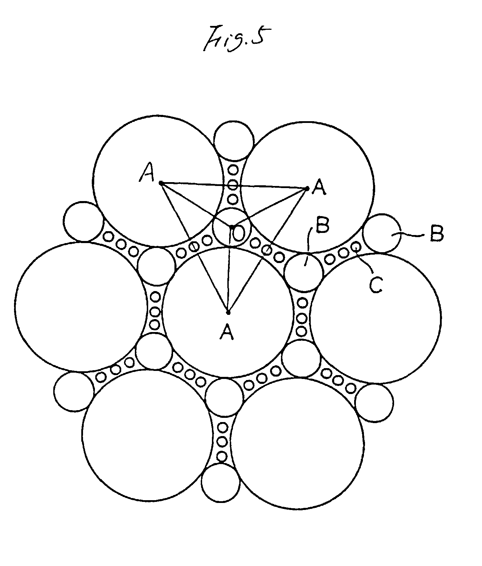

FIG. 1 shows TABLE 1, FIG. 2 shows TABLE 2, FIG. 3 shows TABLE 3, FIG. 4 shows TABLE 4 and FIG. 5 shows an illustrative drawing of the body-centered cubic arrangement of granules projected on a plane.

### Best Mode for Carrying Out the Invention

The ceramic starting material to be used in the present invention contains as principal components at least one kind selected from natural materials such as kaolinite, sericite, montmorillonite and tosdite, or artificial materials such as aluminum oxide, silicone oxide, zirconium oxide and lithium aluminosilicate.

Any granules that are known in the art to form voids after incineration during the baking step can be used for the granules to be filled into the ceramic starting material. However, when a porous ceramic sintered body made to be lightweight with a specific gravity of about 0.1 g/cm³ is manufactured according to the present invention, the mechanical strength of the green body for the ceramic material becomes weak. Accordingly, it is preferable to use low expansivity granular materials like low specific gravity organic foam materials such as polystyrene, polyethylene and polypropylene in order to prevent the ceramic starting materials that serve as frames of the porous body from being cracked due to expansive force caused by expansion of the granules during temperature increase for sintering. Especially preferable examples are maximum foam grains that have been previously expanded at a highest degree (about 99% of expansion (foaming)) that allows no more expansion (foaming) by temperature increase.

While at least two kinds of granules with smaller grain size and larger grain size are used, at least one kind of the smaller size granules with a mean grain size in the range from 0.01 to 0.5 mm, preferably in the range from 0.04 to 0.2 mm and more preferably in the range from 0.06 to 0.1 mm, and at least one kind of the larger size granules with a mean grain size in the range from 0.5 to 5 mm, preferably in the range from 0.8 to 4 mm and more preferably in the range from 1.0 to 3.5 mm are selected, respectively. When the mean grain size becomes smaller, the total grain number is increased so that the frame itself of the porous body becomes so brittle to make it difficult to maintain the frame strength while, when the mean grain becomes larger, the grains make a contact with each other in the green body so that it becomes difficult to maintain the frame of the porous body after sintering.

Accordingly, a combination of the different grain sizes of the larger grains and smaller grains is used because, while formation of the porous body frame is secured by allowing the provability of mutual contact of the larger size grains to be as small as possible, the porous body is not sufficiently made to be lightweight by merely adding the larger size grains since thick (large diameter) frames are formed. Therefore, for making the frame itself lightweight, the specific gravity is decreased by simultaneously filling the porous body with the smaller size granules to an extent not to make the porous body brittle owing to voids generated by the smaller size granules.

The following measures are also considered in the present invention for maintaining the strength of the porous sintered body. That is, provided that four larger size granules are arranged in a three-dimensional space with an equal angles among the lines connecting respective granules, the center of each grain is located at each apex of an equilateral triangular cone (body-centered cubic arrangement) and each apex forms a three-dimensional geometry with an angle of about 109° relative to the center of the equilateral triangular cone. The center of the equi-triangular cone serves as a portion where no granules exist, making the frame thick (large diameter) to inhibit the sintered body from being lightweight.

While the sintered body may be made to be lightweight by substituting the thick frame portion with smaller size granules having fine pores, the frame may be occupied with fine voids to result in reduced strength besides a lot of smaller size grains are needed.

Accordingly, the presence of the medium size granules for forming voids in the thick frame portions becomes significant. In other words, the filling amount of the smaller size granules can be reduced with voids formed by filling this thick portions with the medium size grains, thereby maintaining the strength along with making the sintered body to be more lightweight. Although the medium size grains advantageously have a diameter a little smaller than that theoretically calculated from the body-centered cubic arrangement, it is practically required to have a diameter sufficient for being filled into the thick frame formed among the larger size grains. The actual mean grain size of the medium size granules is, however, selected in the range from 0.5 to 3.0 mm, preferably in the range from 0.8 to 2.5 mm and more preferably in the range from 0.8 to 2.5 mm when the larger size grains with the foregoing mean grain size are selected.

The conditions as described above will be apparent from the illustrative drawing showing the projection plane view of the body-center arrangement as shown in FIG. 5. In the drawing, symbol A represents the centers of the larger size grains, symbol O represents the center of the centers A, symbol B represents the medium size grains, and symbol C represents the smaller size grains.

Detergents, fibers such as pulps, starch, cellulose and the like may be added in the ceramic starting material to be used in the present invention in order to improve the dispersive property of the granules in the principal component as well as for enhancing dry strength of the green body.

The baking atmosphere may be either an oxidative atmosphere or a non-oxidative atmosphere (a reducing atmosphere containing an oxygen source).

Examples for carrying out the present invention will be described below together with comparative examples.

### 〈Example 1〉

Used were 825 parts by weight of kaolinite and 375 parts by weight of sericite as ceramic starting materials and maximum foam polystyrene granules. 50 parts by weight of the larger size granules having a mean grain size of 3.2 mm, a mixture of two kinds of the medium size granules - 130 parts by weight of the medium size granules with a mean grain size of 2.2mm and 70 parts by weight with a mean grain size of 1.0 mm - and 100 parts by weight of the smaller size granules with a mean grain size of 0.08 mm were mixed with 2750 parts by weight of water to prepare a slurry by mixing. The slurry was molded in a mold with a dimension of 5 cm × 5 cm × 10 cm under a molding pressure of 2.1 kg/cm³. After thorough drying (24 hours at 50 °C), the green body formed was taken out of the mold. The green body had a specific gravity of 0.27/cm³, which was baked for 7 hours while the temperature was slowly increased up to 1300 °C. After baking for 1 hour at 1300 °C, the temperature was again slowly decreased within 12 hours. The porous ceramic sintered body had a specific gravity of 0.22 g/cm³. The ceramic sintered body could maintain its shape without being crushed by hand, showing that a good quality of porous ceramic was obtained. The results are shown in TABLE 1.

### 〈Example 2〉

A slurry was prepared by mixing 700 parts by weight of kaolinite and 500 parts by weight of sericite as ceramic starting materials, 50, 100, 70 and 150 parts by weight of the maximum foam grains with a mean grain size of 3.2 mm, 2.2 mm, 1.0 mm and 0.08 mm, respectively, and 1500 parts by weight of water. The slurry was molded in a mold by the same method as described in Example 1, forming a green body with a specific gravity of 0.30g/cm³ after drying. The green body was baked under the same conditions as used previously to obtain a good porous ceramic sintered body with a specific gravity of 0.24 g/cm³. The results are shown in TABLE 1.

### 〈Examples 3 to 6〉

The same experimental procedures as used in Example 1 were applied to a slurry prepared by mixing the ceramic starting materials, granules, water and the like used in Example 1 in proportions listed in TABLE 1. The specific gravities of the green bodies after drying and sintering were as shown in TABLE 1. The ceramic sintered bodies prepared in these examples had sufficient mechanical strengths with good qualities.

### 〈Comparative Examples 1 to 4〉

The mixtures of the ceramic starting materials, granules, water and the like were prescribed as shown in Example 3. The slurry prepared by mixing merely one sort of the foamed grains used in Example 1 in a proportion shown in TABLE 1 was processed as in Example 1. The specific gravities of the green body after drying and after sintering were as shown in TABLE 1.

The green body in Comparative Example 1 prepared by mixing merely the granules with a mean grain size of 3.2 mm, and the green body in Comparative Example 2 prepared by merely mixing the granules with a mean grain size of 2.1 mm were so loosely caked that they had been collapsed during the sintering steps, being impossible to maintain block shapes. The green body prepared by using the granules with a mean grain size of 1.0 mm alone in Comparative Example 3 was half-collapsed during the sintering step to unable handling. Although a green body with a dry specific gravity of less than 0.35 g/cm² was attempted to form using the granules with a mean grain size of 0.08 mm alone in Comparative Example 4, a good green body could not be prepared due to a large bulk volume of the foamed body. Therefore, a green body with a dry specific gravity of 0.39 g/cm' was forced to be subjected to sintering. The sintered body as described above was largely shrunk during sintering with an increased specific gravity of 0.46 g/cm³ as compared with that after drying. The sintered body was so brittle that it was easily collapsed. These results are shown in TABLE 1.

### 〈Examples 7 to 9, Comparative Examples 5 and 6〉

The slurry obtained by mixing the ceramic starting materials, granules, water and the like in proportions listed in TABLE 2 were processed by the same method as in Example 1. A series of Examples 7 to 9 and Comparative Examples 5 and 6 were carried out for observing the effects in which one kind of the larger size grains were used with a fixed amount of addition while changing the grain size of the smaller size granules. The results as shown in TABLE 2 were obtained with respect to the specific gravity of the green body after drying, specific gravity of the porous body after sintering and the conditions of the sintered body.

A good ceramic sintered body was obtained in Example 8. Although the ceramic sintered body obtained in Example 7 had a little brittle frame, it could maintain the shape of the sintered body suitable for handling. While cells in the sintered body in Example 9 tend to be rough, its shape could be maintained.

Although the sintered body prepared in Comparative Example 5 could barely maintain its shape, it was so brittle that the finger could penetrate into the sintered body by gently pressing with the finger and handling was impossible since it was readily collapsed. The shape of the sintered body in Comparative Example 6 was barely maintained with its surface skin but inside of it had been completely collapsed.

### 〈Example 10 to 12, Comparative Example 7 and 8〉

Slurries obtained by mixing the ceramic starting materials, granules (maximum foam granules), water and the like were processed by the same method as in Example 1. A series of Examples and Comparative Examples were carried out in order to observe the effects of using one kind of the smaller size granules with a fixed amount of addition while changing the grain size of the larger size granules. The specific gravities of the green bodies after drying, specific gravities of the porous bodies after sintering and the conditions of the sintered bodies are shown in TABLE 3.

A good ceramic sintered body was obtained in Example 11 while the ceramic sintered bodies obtained in Examples 10 and 12 were satisfactory.

On the contrary, the ceramic sintered body in Comparative Example 7 had been shrunk by being accompanied by an increase of the specific gravity. The ceramic sintered body in Comparative Example 8 had been collapsed during the sintering step.

### 〈Examples 13 to 15, Comparative Examples 9 and 10〉

The slurries obtained by mixing the ceramic starting materials, granules, water and the like in proportions shown in TABLE 4 were processed by the same method as used in Example 1. A series of Examples and Comparative Examples were carried out in order to observe the effects of fixing the amount of addition of the first larger size grains and smaller size grains while changing the amount of addition of the second larger size grains. The specific gravities of the green bodies after drying, specific gravities of the porous bodies after sintering and the conditions of the sintered bodies are shown in TABLE 4.

Although good ceramic sintered bodies were obtained in Example 13 to 15, an increase of the specific gravity was observed in Comparative Example 9 with a poor mechanical strength of the brittle sintered body. While appearance of the sintered body in Comparative Example 10 was good, cells in it had been collapsed.

### Industrial Applicability

The present invention provides a lightweight porous ceramic with a specific gravity of less than 0.3 g/cm³ or up to 0.1 g/cm³ at best, providing a unprecedented ultra-lightweight porous ceramic.

## Claims

1. A porous ceramic sintered body formed by filling a ceramic starting material with granules to be converted into voids after incinerating in the baking step, wherein at least two kinds of said granules having different average grain sizes with each other are filled into the ceramic starting material to adjust the specific gravity to 0.3 g/cm³ or less.

2. A porous ceramic sintered body according to Claim 1, wherein the granules are composed of larger size granules for forming a porous frame and smaller size granules for making the frame itself more porous.

3. A porous ceramic sintered body according to Claim 1 or 2, wherein medium size granules having a mean grain size between those of the larger size granules and smaller size granules are filled besides the larger size granules and the smaller size granules.

4. A porous ceramic sintered body according to Claim 1, 2 or 3, wherein the mean grain size of the medium size granules is selected from the grain size by which voids are formed by filling the medium size granules in the thick frame portions formed among the larger size granules.

5. A porous ceramic sintered body according to Claim 1, 2, 3 or 4, wherein the mean grain size of the larger size granules is in the range from 1.5 to 5 mm, preferably in the range from 2.0 to 4.5 mm and more preferably in the range from 2.0 to 3.5 mm, and the mean grain size of the smaller size granules is in the range from 0.01 to 0.5 mm, preferably in the range from 0.04 to 0.2 mm and more preferably in the range from 0.06 to 0.15 mm.

6. A porous ceramic sintered body according to Claim 2, 3, 4 or 5, wherein the mean grain size of the medium size granules is in the range from 0.5 to 3.0 mm, and preferably in the range from 0.8 to 2.5 mm.

7. A method for manufacturing a porous ceramic sintered body by filling a ceramic starting material with granules to be converted into voids by incinerating in the baking step, wherein a green body is formed by filling the ceramic starting material with larger size granules selected from those having a mean grain size of 1.5 to 5 mm, medium size granules selected from those having a mean grain size of 0.5 to 3.0 mm and smaller size granules selected from those having a mean grain size of 0.04 to 0.2 mm, followed by sintering to form a porous ceramic sintered body with a specific gravity of 0.3 g/cm³ or less.
